# EUROPÄISCHE PATENTSCHRIFT

(11) **EP 3 597 084 B1**
(45) Veröffentlichungstag und Bekanntmachung des Hinweises auf die Patenterteilung: **16.09.2020**
(21) Anmeldenummer: 19183881.2
(22) Anmeldetag: 02.07.2019
(51) Int. Cl.: A47J 31/46, A47J 31/52

(54) **HEISSGETRÄNKEZUBEREITUNGSVORRICHTUNG MIT EINEM HEISSWASSERSPEICHER**
HOT BEVERAGE PREPARATION DEVICE WITH A HOT WATER TANK
PRÉPARATION DE BOISSONS CHAUDES À L'AIDE D'UN CHAUFFE-EAU À ACCUMULATION

(30) Priorität: 18.07.2018 DE 102018117384
(43) Veröffentlichungstag der Anmeldung: 22.01.2020
(73) Patentinhaber: FRANKE Kaffeemaschinen AG, 4663 Aarburg (CH)
(72) Erfinder: Hoch, Hans-Peter, 4805 Brittnau (CH)
(74) Vertreter: Lemcke, Brommer & Partner Patentanwälte Partnerschaft mbB

(56) Entgegenhaltungen:
- WO-A1-2011/140582
- DE-A1-102011 084 424
- DE-A1-102015 217 999

## Beschreibung

Die vorliegende Erfindung betrifft eine Heißgetränkezubereitungsvorrichtung, insbesondere eine Kaffeemaschine, mit einem Heißwasserspeicher zur Erhitzung und Speicherung von Heißwasser, einer zulaufseitig mit dem Heißwasserspeicher fluidleitend verbundenen Wasserpumpe und mit einer entnahmeseitig mit dem Heißwasserspeicher fluidleitend verbundenen Brühvorrichtung, wobei der Heißwasserspeicher ein Überdruckventil aufweist, welches bei Überschreiten eines vorgegebenen Grenzdrucks öffnet und Heißwasser aus dem Heißwasserspeicher entweichen lässt.

Bei Portionskaffeemaschinen kommen häufig Heißwasserspeicher, sogenannte Boiler, zum Einsatz, in denen Heißwasser zubereitet und vorgehalten wird, damit bei Bezug eines Kaffeegetränks eine lange Vorwärmzeit entfällt. Da sich das Wasser beim Erhitzen im Heißwasserspeicher ausdehnt, steht der Heißwasserspeicher typischerweise unter Druck. Um ein Bersten des Heißwasserspeichers oder einer mit diesem verbundenen Leitung zu verhindern, muss an dem Heißwasserspeicher ein Überdruckventil vorgesehen sein, welches bei Überschreiten eines zulässigen Maximaldrucks öffnet und zum Druckabbau Heißwasser aus dem Heißwasserspeicher entweichen lässt.

Um während eines Brühvorganges den hierfür erforderlichen Wasserdruck aufrechtzuerhalten, wird eine Wasserpumpe benötigt. Hierbei kommen häufig sogenannte Schwingankerpumpen zum Einsatz, da diese wegen ihres einfachen Aufbaus mit wenigen mechanisch bewegten Teilen langlebig und preisgünstig sind. Es versteht sich hierbei, dass der von der Wasserpumpe im Betrieb erzeugte Spitzendruck den Grenzdruck nicht überschreiten darf, bei dem das im Heißwasserspeicher verbaute Überdruckventil öffnet, denn anderenfalls würde ständig Wasser zum Überdruckventil austreten.

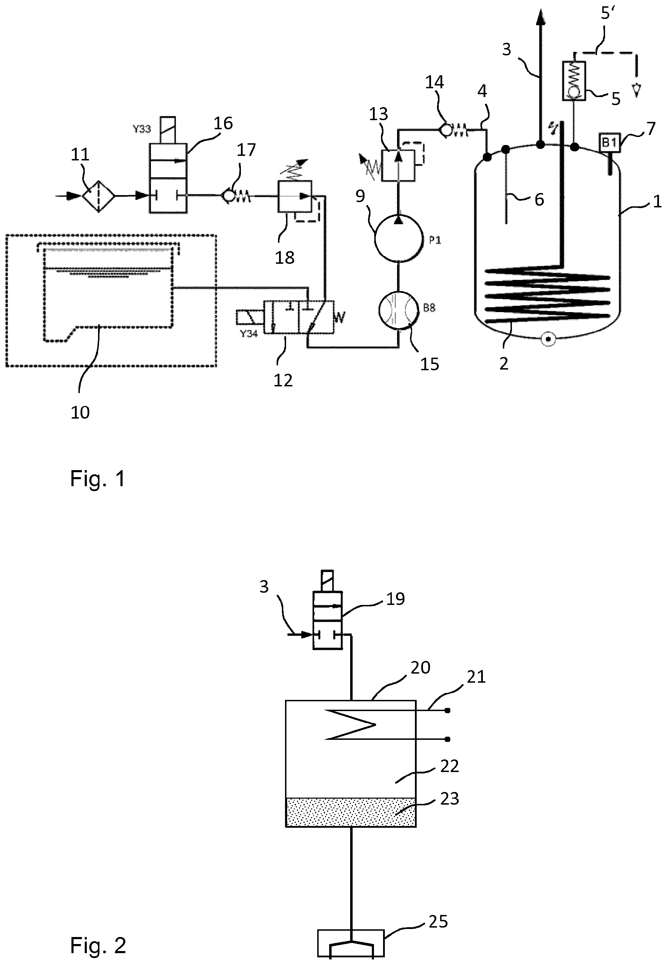

Die Druckschrift WO 2011/140582 A1 offenbart eine Heißgetränkezubereitungsvorrichtung mit einem Heißwasserspeicher 260 zur Erhitzung und Speicherung von Heißwasser, einer zulaufseitig mit dem Heißwasserspeicher fluidleitend verbundenen Wasserpumpe 234 und mit einer entnahmeseitig mit dem Heißwasserspeicher fluidleitend verbundenen Brühvorrichtung 292. Zwischen Wasserpumpe und Heißwasserspeicher ist ein Druckreduzierventil 235 angeordnet (siehe Fig. 2). Nachteilig an einem solchen Aufbau ist, dass die verwendeten Schwingankerpumpen eine verhältnismäßig geringe Förderleistung haben, was einerseits zu einer relativ langen Zubereitungszeit führt, andererseits jedoch auch die sensorische Qualität von auf diese Weise zubereiteten Kaffeegetränken beeinträchtigt. Daher werden Schwingankerpumpen derzeit vor allem für Maschinen im Haushaltsbereich oder für offene Systeme verwendet, das heißt für Maschinen, die ohne Druckboiler eingesetzt werden.

Die vorliegende Erfindung hat sich zur Aufgabe gesetzt, eine Heißgetränkezubereitungsvorrichtung anzugeben, die in Bezug auf die genannten Nachteile verbessert ist.

Die Aufgabe wird gelöst durch die Merkmale des Anspruchs 1. Vorteilhafte Ausgestaltungen sind den abhängigen Ansprüchen zu entnehmen.

Bei einer Heißgetränkezubereitungsvorrichtung der eingangs genannten Art ist erfindungsgemäß vorgesehen, dass die Wasserpumpe derart ausgebildet ist, dass sie einen Arbeitsdruck erzeugt, der oberhalb des vom Überdruckventil vorgegebenen Grenzdrucks liegt, und dass zwischen Wasserpumpe und Heißwasserspeicher ein Druckreduzierventil angeordnet ist, welches den Wasserdruck zulaufseitig des Wasserspeichers auf einen unterhalb des Grenzdrucks liegenden Druckwert begrenzt. Die Verwendung einer leistungsstärkeren, mit einem höheren Arbeitsdruck arbeitenden Pumpe in Kombination mit einem Druckreduzierventil führt nach Erkenntnissen der Erfinder zu dem überraschenden Ergebnis, dass trotz des Druckreduzierventils ein insgesamt höherer Volumenstrom und eine kürzere Zubereitungszeit erreicht werden und andersseits die sensorische Qualität der mit der erfindungsgemäßen Vorrichtung zubereiteten Heißgetränke gegenüber herkömmlichen Maschinen verbessert ist.

Als Wasserpumpe kommt vorzugsweise eine Schwingankerpumpe zum Einsatz. Die Kombination einer leistungsfähigen Schwingankerpumpe mit einem Druckreduzierventil eröffnet den Einsatz von preisgünstigen Schwingankerpumpen in hochwertigen Maschinen für den gewerblichen Bereich, ohne die Nachteile, die sich bislang in Kombination mit einem Heißwasserspeicher ergaben, in Kauf nehmen zu müssen.

Bei einer bevorzugten Ausführungsform ist vorgesehen, dass das Überdruckventil bei einem Grenzdruck im Bereich zwischen 10 und 12 bar öffnet und das Druckreduzierventil den Wasserdruck zulaufseitig des Wasserspeichers auf einen Druckwert zwischen 8 und 10 bar begrenzt. In diesen Wertebereichen werden nach Erfahrungen der Erfinder die besten Resultate in Bezug auf sensorische Qualität der Getränke und störungsfreiem Betrieb der Vorrichtung erzielt.

Saugseitig der Pumpe kann zusätzlich ein Durchflussmesser angeordnet sein. Dieser dient dazu, bei einer Getränkezubereitung die Menge des abgegebenen Heißwassers zu bestimmen und somit die für das jeweilige Getränk vorgegebene oder vorgebbare Wassermenge zu dosieren.

Bei einer bevorzugten Ausführungsform der Vorrichtung ist vorgesehen, dass die Wasserpumpe saugseitig über eine Wasserzuleitung mit einem Wegeventil verbunden ist, über welches die Wasserzuleitung umschaltbar, wahlweise mit einem Wassertank oder mit einem Leitungswasseranschluss verbindbar ist. Die Vorrichtung kann somit entweder mit einem permanenten Anschluss an das öffentliche Leitungsnetz oder autark mit einem integrierten Wassertank betrieben werden.

Wird die Wasserpumpe der Vorrichtung saugseitig mit einem Leitungswasseranschluss verbunden, so ist bevorzugt in einer Wasserzuleitung zwischen Wasserpumpe und Leitungswasseranschluss ein zweites Druckmittelreduzierventil angeordnet, das den Leitungsdruck auf einen Wert unterhalb des Wertes des zwischen Wasserpumpe und Heißwasserspeicher angeordneten ersten Druckreduzierventils reduziert. Der Betrieb der Vorrichtung ist somit unabhängig vom Druck im öffentlichen Leitungsnetz, an das die Vorrichtung angeschlossen wird. Vorzugsweise liegt der Wert, auf den das zweite Druckreduzierventil den Leitungsdruck reduziert, unterhalb von 1,5 bar, insbesondere in einem Bereich von 0,2 bis 1,0 bar. Ein entsprechend niedriger Eingangsdruck ermöglicht einen zuverlässigen und verschleißarmen Betrieb der Wasserpumpe.

Weitere Vorteile und Ausgestaltungen ergeben sich aus der nachfolgenden Beschreibung von Ausführungsbeispielen anhand der Figuren, dabei zeigt:
- Figur 1: ein Wasserlaufschema von einem Heißwassererzeuger mit integrierter Heizung, Wasserpumpe und vorgeschaltetem Druckreduzierventil, und
- Figur 2: eine schematische Darstellung einer entnahmeseitig an den Heißwasserspeicher aus Figur 1 angeschlossene Brühvorrichtung.

In Figur 1 ist ein sogenannter Boiler 1 dargestellt, also ein Heißwasserspeicher mit integrierter Heizung 2, in dem Wasser erhitzt und Heißwasser gespeichert wird. Über eine Entnahmeleitung 3 kann Heißwasser aus dem Boiler 1 entnommen und einer Brühvorrichtung wie in Figur 2 gezeigt zugeführt werden. Über eine Zuleitung 4 wird dem Boiler 1 frisches Kaltwasser zugeführt. Da sich das im Boiler enthaltene Wasser beim Erhitzen ausdehnt, steht der Boiler 1 unter Druck. Um ein Bersten des Boilers bei Überschreiten eines zulässigen Maximaldrucks zu verhindern, ist an den Boiler außerdem ein Überdruck- bzw. Sicherheitsventil 5 angeschlossen, welches bei Überschreiten eines voreingestellten Grenzdrucks öffnet und Wasser aus dem Boiler entweichen lässt. Die gestrichelt gezeichnete Leitung 5', über die Wasser über das Überdruckventil 5 entweichen kann, kann beispielsweise mit einem Abfluss oder einem Abwasserbehälter verbunden sein. Der Boiler 1 weist außerdem einen Füllstandssensor 6 und einen Temperatursensor 7 auf.

Zulaufseitig ist an den Heißwasserbereiter 1 eine Wasserpumpe 9 angeschlossen, die Frischwasser aus einem Wassertank 10 oder von einem Leitungswasseranschluss 11 in den Heißwasserspeicher 1 pumpt, um diesen bei Entnahme von Heißwasser nachzufüllen und den Wasserdruck ausgangsseitig des Heißwasserspeichers 1 aufrechtzuerhalten. Die Umschaltung zwischen Wassertank 10 und Leitungswasseranschluss 11 erfolgt über ein 3/2-Wegeventil 12.

Zwischen der Wasserpumpe 9 und dem Zuleitungsanschluss 4 des Heißwasserspeichers 1 ist außerdem ein Druckreduzierventil 13 angeordnet, welches den Ausgangsdruck der Wasserpumpe 9 und damit den Eingangsdruck des Wasserspeichers 1 auf einen voreingestellten Wert begrenzt. Zudem befindet sich zwischen dem Druckreduzierventil 13 und dem Wasserzulauf 4 des Wasserspeichers 1 ein Rückschlagventil, welches verhindert, dass im Falle eines Druckanstiegs im Inneren des Wasserspeichers 1, beispielsweise beim Aufheizen mittels der Heizung 2, Wasser zum Zulauf 4 zurückströmen kann. Vor der Wasserpumpe 9 befindet sich außerdem noch ein Durchflussmesser 15, mit dem die von der Pumpe geförderte Wassermenge zur Dosierung des ausgegebenen Heißwassers gemessen werden kann. In der vom Leitungsanschluss 11 kommenden Zuleitung befinden sich außerdem noch ein Schließventil 16, ein Rückschlagventil 17 sowie ein Druckreduzierventil 18, welches den Leitungsdruck auf einem voreingestellten Wert von etwa 0,3 bar im Ausführungsbeispiel begrenzt.

Der Heißwasserspeicher 1 ist für einen zulässigen Druck von 12 bar ausgelegt. Dementsprechend öffnet das Überdruckventil 5 bei einem Druck von 12 bar und lässt Wasser über die Ablaufleitung 5' entweichen.

Als Wasserpumpe 9 kommt eine Schwingankerpumpe zum Einsatz, die für einen Maximaldruck von 12 bis 18 bar ausgelegt ist, wobei hierbei fertigungsbedingt bis zu 30 % Abweichungen innerhalb einer Pumpenserie auftreten können. Eine Schwingankerpumpe ist eine Pumpenform, die durch einen schwingenden Anker anstelle eines rotierenden Motors angetrieben wird. Hierbei wird ein ferromagnetischer Anker, der gleichzeitig als Kolben einer Pumpe wirkt, im Wechselfeld eines Elektromagneten gegen die Rückstellkraft einer Feder in Schwingung versetzt und fördert hierbei das zu pumpende Medium.

Da der von der Schwingankerpumpe 9 erzeugte Maximaldruck über dem Grenzdruck des Überdruckventils 5 liegt, ist das Druckreduzierventil 13 vorgesehen, welches den Ausgangsdruck der Pumpe 9 auf einen voreingestellten Wert im Bereich von 8 bis 10 bar begrenzt. Bei einem Druckreduzierventil (oder Druckminderer) wird der Ausgangsdruck am Ventil auf einen Steuereingang zugeführt und sorgt dafür, dass das Ventil bei Überschreiten des vorgegebenen Soll-Ausgangsdrucks sperrt und der Ausgangsdruck somit nicht über diesen voreingestellten Wert ansteigen kann. Als Druckaufnehmer kann hierbei ein Kolben oder eine Membran dienen. Das Druckreduzierventil 13 stellt somit sicher, dass bei Betrieb der Schwingankerpumpe 9 der Druck im Wasserspeicher 1 nicht über den Grenzdruck ansteigen kann, bei dem das Überdruckventil 5 öffnet. Außerdem werden durch den Druckminderer 13 ausgangsseitig am Heißwasserspeicher 1 angeschlossene Bauteile, insbesondere Magnetventile, die für einen Arbeitsdruck von beispielsweise 10 bar ausgelegt sein können, geschützt.

In Figur 2 ist beispielhaft eine Brühvorrichtung an sich bekannter Bauart gezeigt. Über ein Magnetventil 19 kann bei eingeschalteter Wasserpumpe 9 Wasser aus dem Wasserspeicher 1 zu der Brühvorrichtung 20 gefördert werden. Eine solche Brühvorrichtung wird häufig auch als Brühgruppe bezeichnet. Sie umfasst in an sich bekannter Weise eine Heizung 21, mit der die Brühgruppe vorgewärmt werden kann, und eine Brühkammer 22, in die portioniertes, frisch gemahlenes Kaffeepulver 23 eingefüllt wird. Eine Brühgruppe, die im Rahmen der vorliegenden Erfindung eingesetzt werden kann, ist beispielsweise in der EP 2 561 778 A1 beschrieben.

Die Brühgruppe 20 ist so ausgestaltet, dass sie geöffnet werden kann, um eine portionierte Menge Kaffeepulver einzufüllen, welches zuvor in einer Mühle des Kaffeeautomaten portionsweise frisch gemahlen wurde. Außerdem kann bei geöffneter Brühgruppe nach dem Brühvorgang der verbliebene Kaffeesatz in einen Tresterbehälter ausgeworfen werden. Die Brühgruppe 20 weist außerdem einen beweglichen Kolben auf (nicht dargestellt), der das eingefüllte Kaffeepulver gegen ein in der Brühkammer 21 befindliches Brühsieb verdichtet. Nach Zurückfahren des Kolbens kann das so verdichtete Kaffeepulver von dem unter dem Druck der Pumpe 9 stehenden Brühwasser aus dem Heißwasserspeicher 1 durchströmt werden. Der fertig gebrühte Kaffee wird von der Brühgruppe 20 über eine Auslassleitung zu einem Auslauf 25 für Kaffeegetränke geleitet. Selbstverständlich kann anstatt einer wie hier gezeigten Brühgruppe 20 auch eine Brühvorrichtung zum Einsatz kommen, die zur Aufnahme sogenannter Kaffeekapseln oder Kaffeepads ausgebildet ist.

## Patentansprüche

1. Heißgetränkezubereitungsvorrichtung mit einem Heißwasserspeicher (1) zur Erhitzung und Speicherung von Heißwasser, einer zulaufseitig mit dem Heißwasserspeicher (1) fluidleitend verbundenen Wasserpumpe (9) und mit einer entnahmeseitig mit dem Heißwasserspeicher (1) fluidleitend verbundenen Brühvorrichtung (20), wobei der Heißwasserspeicher (1) ein Überdruckventil (5) aufweist, welches bei Überschreiten eines vorgegebenen Grenzdrucks öffnet und Heißwasser aus dem Heißwasserspeicher entweichen lässt,
**dadurch gekennzeichnet, dass**
die Wasserpumpe (9) derart ausgebildet ist, dass sie einen Spitzendruck erzeugt, der oberhalb des vom Überdruckventil (5) vorgegebenen Grenzdrucks liegt und dass zwischen Wasserpumpe (9) und Heißwasserspeicher (1) ein Druckreduzierventil (13) angeordnet ist, welches den Wasserdruck zulaufseitig des Wasserspeichers (1) auf einen unterhalb des Grenzdrucks liegenden Druckwert begrenzt.

2. Heißgetränkezubereitungsvorrichtung nach Anspruch 1, bei der die Wasserpumpe (9) eine Schwingankerpumpe ist.

3. Heißgetränkezubereitungsvorrichtung nach einem der vorangehenden Ansprüche, bei der das Überdruckventil (5) bei einem Grenzdruck im Bereich zwischen 10 und 12 bar öffnet und das Druckreduzierventil (13) den Wasserdruck zulaufseitig des Wasserspeichers (1) auf einen Druckwert zwischen 8 und 10 bar reduziert.

4. Heißgetränkezubereitungsvorrichtung nach einem der vorangehenden Ansprüche, bei der saugseitig der Pumpe (9) ein Durchflussmesser (15) angeordnet ist.

5. Heißgetränkezubereitungsvorrichtung nach einem der vorangehenden Ansprüche, bei der die Wasserpumpe (9) saugseitig über eine Wasserzuleitung mit einem Wegeventil (12) verbunden ist, über welches die Wasserzuleitung umschaltbar wahlweise mit einem Wassertank (10) oder mit einem Leitungswasseranschluss (11) verbindbar ist.

6. Heißgetränkezubereitungsvorrichtung nach einem der vorangehenden Ansprüche, bei dem die Wasserpumpe (9) saugseitig mit einem Leitungswasseranschluss (11) verbindbar ist und sich in einer Wasserzuleitung zwischen Wasserpumpe (9) und Leitungswasseranschluss (11) ein zweites Druckreduzierventil (18) befindet, das den Leitungsdruck auf einen Wert unterhalb des Wertes des zwischen Wasserpumpe (9) und Heißwasserspeicher (1) angeordneten ersten Druckreduzierventils (13) reduziert.

7. Heißgetränkezubereitungsvorrichtung nach Anspruch 6, bei dem das zweite Druckreduzierventil (18) den Leitungsdruck auf einen Wert unterhalb von 1,5 bar, insbesondere auf einen Druckwert im Bereich von 0,2 bis 1,0 bar reduziert.

## Claims

1. Hot beverage preparation apparatus having a hot water reservoir (1) for heating and storing hot water, having a water pump (9) which is in fluid-conducting connection with the hot water reservoir (1) on the inlet side thereof, and having a brewing device (20) which is in fluid-conducting connection with the hot water reservoir (1) on the withdrawal side thereof, wherein the hot water reservoir (1) has a pressure relief valve (5) which opens when a specified limit pressure is exceeded and allows hot water to escape from the hot water reservoir,
**characterised in that**
the water pump (9) is constructed in such a way that it generates a peak pressure which is above the limit pressure specified by the pressure relief valve (5), and between the water pump (9) and the hot water reservoir (1) there is arranged a pressure-reducing valve (13) which limits the water pressure on the inlet side of the water reservoir (1) to a pressure value below the limit pressure.

2. Hot beverage preparation apparatus according to claim 1, wherein the water pump (9) is a vibrating armature pump.

3. Hot beverage preparation apparatus according to either one of the preceding claims, wherein the pressure relief valve (5) opens at a limit pressure in the range between 10 and 12 bar and the pressure-reducing valve (13) reduces the water pressure on the inlet side of the water reservoir (1) to a pressure value between 8 and 10 bar.

4. Hot beverage preparation apparatus according to any one of the preceding claims, wherein a flow meter (15) is arranged on the suction side of the pump (9).

5. Hot beverage preparation apparatus according to any one of the preceding claims, wherein the water pump (9) is on the suction side connected via a water supply line to a directional control valve (12) by means of which the water supply line is selectively switchable to connect to a water tank (10) or to a mains water connection (11).

6. Hot beverage preparation apparatus according to any one of the preceding claims, wherein the water pump (9) is on the suction side connectible to a mains water connection (11), and in a water supply line between the water pump (9) and the mains water connection (11) there is a second pressure-reducing valve (18) which reduces the mains pressure to a value below the value of the first pressure-reducing valve (13) arranged between the water pump (9) and the hot water reservoir (1).

7. Hot beverage preparation apparatus according to claim 6, wherein the second pressure-reducing valve (18) reduces the mains pressure to a value below 1.5 bar, especially to a pressure value in the range of from 0.2 to 1.0 bar.

## Revendications

1. Dispositif de préparation de boissons chaudes, comprenant un accumulateur d'eau chaude (1) dévolu au réchauffage et au stockage d'eau chaude, une pompe à eau (9) en communication fluidique avec ledit accumulateur (1), côté afflux, et un dispositif de lixiviation (20) en communication fluidique avec ledit accumulateur (1), côté extraction, l'accumulateur (1) étant équipé d'une soupape de surpression (5) qui s'ouvre lors du dépassement d'une pression limite préétablie, et permet une décharge d'eau chaude hors dudit accumulateur,
**caractérisé par le fait que**
la pompe à eau (9) est réalisée de manière à engendrer une pression de pointe supérieure à la pression limite préétablie par la soupape de surpression (5) ; et **par le fait qu'**une vanne (13) réductrice de pression, interposée entre ladite pompe à eau (9) et l'accumulateur d'eau chaude (1), limite la pression de l'eau, côté afflux dudit accumulateur d'eau (1), à une valeur de pression inférieure à la pression limite.

2. Dispositif de préparation de boissons chaudes, selon la revendication 1, dans lequel la pompe à eau (9) est une pompe à induit oscillant.

3. Dispositif de préparation de boissons chaudes, selon l'une des revendications précédentes, dans lequel la soupape de surpression (5) s'ouvre en présence d'une pression limite située dans la plage comprise entre 10 et 12 bar et la vanne (13) réductrice de pression réduit la pression de l'eau, côté afflux de l'accumulateur d'eau (1), à une valeur de pression comprise entre 8 et 10 bar.

4. Dispositif de préparation de boissons chaudes, selon l'une des revendications précédentes, dans lequel un débitmètre (15) est implanté côté aspiration de la pompe (9).

5. Dispositif de préparation de boissons chaudes, selon l'une des revendications précédentes, dans lequel la pompe à eau (9) est raccordée côté aspiration, par l'intermédiaire d'un conduit d'arrivée d'eau, à une vanne directionnelle (12) par laquelle ledit conduit d'arrivée d'eau peut être commuté pour être relié, sélectivement, à un réservoir d'eau (10) ou à un raccord (11) d'eau de canalisation.

6. Dispositif de préparation de boissons chaudes, selon l'une des revendications précédentes, dans lequel la pompe à eau (9) peut être reliée à un raccord (11) d'eau de canalisation, côté aspiration, et une seconde vanne (18) réductrice de pression intégrée dans un conduit d'arrivée d'eau, entre ladite pompe à eau (9) et ledit raccord (11) d'eau de canalisation, réduit la pression de canalisation à une valeur inférieure à la valeur de la première vanne (13) réductrice de pression, interposée entre ladite pompe à eau (9) et l'accumulateur d'eau chaude (1).

7. Dispositif de préparation de boissons chaudes, selon la revendication 6, dans lequel la seconde vanne (18) réductrice de pression réduit la pression de canalisation à une valeur inférieure à 1,5 bar, notamment à une valeur de pression située dans la plage de 0,2 à 1,0 bar.
